# EUROPÄISCHE PATENTSCHRIFT

(11) **EP 0 491 903 B1**
(45) Veröffentlichungstag und Bekanntmachung des Hinweises auf die Patenterteilung: **30.11.1994**
(21) Anmeldenummer: 91911910.7
(22) Anmeldetag: 25.06.1991
(51) Int. Cl.: F16H 57/00, B60K 17/00

(54) **SCHALLABSTRAHLUNGSGEDÄMPFTE LAGERUNG EINES ANTRIEBSAGGREGATES**
SOUND-DAMPED FITTING OF A DRIVE SYSTEM
MONTAGE ACOUSTIQUEMENT ISOLE D'UN GROUPE D'ENTRAINEMENT

(30) Priorität: 11.07.1990 DE 4022049
(43) Veröffentlichungstag der Anmeldung: 01.07.1992
(73) Patentinhaber: Xaver Fendt GmbH & Co., D-87609 Marktoberdorf (DE)
(72) Erfinder: NETT, Hans-Peter, D-8952 Marktoberdorf (DE); HONZEK, Robert, D-8957 Oberthingau (DE); HEINDL, Richard, D-8952 Marktoberdorf (DE); HOMEL, Rainer, D-8952 Marktoberdorf (DE)
(86) Internationale Anmeldenummer: EP9101182
(87) Internationale Veröffentlichungsnummer: WO9201176

(56) Entgegenhaltungen:
- DE-A- 3 235 378
- DE-A- 3 843 272
- FR-A- 1 113 192
- US-A- 4 019 600

## Beschreibung

Die Erfindung betrifft eine schallabstrahlungsgedämpfte Lagerung eines Antriebsaggregates, insbesondere eines hydrostatischen Getriebes, innerhalb eines Fahrzeuggetriebegehäuses entsprechend den weiteren Angaben im Oberbegriff des Hauptanspruches.

Bei bekannten Lagerungen dieser Art, so auch bei der in der DE 38 43 272 A1 beschriebenen Lagerung, ist das hydrostatische Getriebe durch eine axiale Öffnung in das Getriebegehäuse eingeschoben. Die axiale und radiale Festleaung des hydrostatischen Getriebes gegenüber dem Getriebegehäuse erfolgt mittels schnurförmiger elastischer Lagerelemente, die jeweils auf endseitigen, umlaufenden Lagerflächen des hydrostatischen Getriebes umlaufend aufgesetzt sind und in der Einbauposition in passende Bohrungsabsätze im Getriebegehäuse eingreifen. Da die Lagerflächen für die elastischen Lagerelemente aus konstruktiven Gründen am Außenumfang des hydrostatischen Getriebes angebracht sind, besitzen sie einen verhältnismäßig großen Durchmesser. Ein solcher ist im Hinblick auf eine geringe spezifische Belastung und die Dämpfungsfunktion der Lagerelemente allgemein zwar nicht unbedingt abzulehnen, im Hinblick auf die damit einhergehende aufwendige Gehäusebearbeitung aber auch nicht anzustreben, da für eine Maßgenaue Bearbeitung im Durchmesser derart großer Lagerflächen teure Sondermaschinen benötigt werden.

Überdies werden bei der bekannten Lagerung für die Drehmomentabstützung des hydrostatischen Antriebes weitere elastische Dämpfungselemente benötigt, die verhältnismäßig voluminös bauen und nach einem nicht einfach herzustellenden Sitz im Getriebegehäuse und im hydrostatischen Getriebe verlangen.

Der Ersatz funktionsuntüchtiger Dämpfungselemente gestaltet sich ferner schwierig, als dazu das hydrostatische Getriebe aus dem Getriebegehäuse entnommen werden muß, was wiederum nicht möglich ist, ohne zuvor auch das Getriebegehäuse aus dem Fahrzeug zu entfernen.

Ausgehend von einem Fahrzeug mit der beschriebenen Lagerung für das hydrostatische Getriebe wird die Aufgabe der Erfindung darin erblickt, eine schallabstrahlungsgedämpfte Lagerung zu schaffen, die bei einer geringen spezifischen Belastung mit geringen Abmessungen für die Dampfungselemente auskommt.

Die Lösungsmerkmale dieser Aufgabe sind im kennzeichnenden Teil des Anspruches 1 angegeben.

Durch die Erfindung stellen sich sowohl bei der Montage des hydrostatischen Getriebes und der Dämpfungselemente als auch bei der Fertigung der betreffenden Bauteile erhebliche Vorteile ein. So gestaltet sich dadurch, daß das Getriebegehäuse auch in eingebautem Zustand durch eine zweckmäßig unten oder oben befindliche Öffnung zugänglich ist, der Ein- und Ausbau des hydrostatischen Getriebes anläßlich der Fahrzeugmontage oder einer Reparatur einfacher als bisher, da hierzu das Getriebegehäuse oder die anschließenden Gehäuse nicht ausgebaut werden müssen. Eine gute Koaxialität der Eingangs- und Ausgangswelle des hydrostatischen Getriebes mit den Anschlußwellen läßt sich bequem dadurch erreichen, daß nach dem Abstecken der stangenförmigen Träger zunächst die betreffenden Wellen miteinander gekuppelt werden, bevor das hydrostatische Getriebe auf den stangenförmigen Trägern, die im übrigen verhältnismäßig geringe Querabmessungen aufweisen, festgelegt wird. Mit den geringen Querabmessungen der Träger bleiben auch die Abmessungen der Dämpfungselemente sowie deren Aufnahmebohrungen im Getriebegehäuse sehr gering, so daß bei geometrisch einfachen Formen keine Herstellungsschwierigkeiten zu erwarten sind. Die benötigten Dämpfungselemente können sämtlich von gleicher Gestalt sein, wobei sie sowohl die Axial- und Radialkräfte als auch die Drehmomentabstützung des hydrostatischen Getriebes übernehmen. Funktionsuntuchtige Dämpfungselemente lassen sich wegen ihrer guten Zugänglichkeit von außen ohne großen Aufwand entfernen und durch funktionstüchtige ersetzen.

Weitere erfinderische Ausgestaltungen der Erfindung gehen aus den übrigen Ansprüchen hervor. Insbesondere in Bezug auf die Ansprüche 2 und 3 ergibt sich dabei der Vorteil, daß sich beim Einfedern der Dämpfungselemente geringste Abweichungen zwischen der Antriebs- bzw. Abtriebswelle des hydrostatischen Getriebes ergeben.

Ein Ausführungsbeispiel der Erfindung wird im folgenden anhand einer Zeichnung näher erläutert. Es zeigt:
- Fig. 1:: Einen vertikalen Längsschnitt durch eine Lagerung eines hydrostatischen Getriebes in einem Getriebegehäuse,
- Fig. 2:: eine Ansicht der Lagerung nach der Linie A-B in Fig. 1,
- Fig. 3:: eine erste Ausführungsform einer elastischen Lagerung einer Abstützstange (Einzelheit X) und
- Fig. 4:: eine zweite Ausführungsform einer elastischen Lagerung (Einzelheit Y) entsprechend Fig. 3.

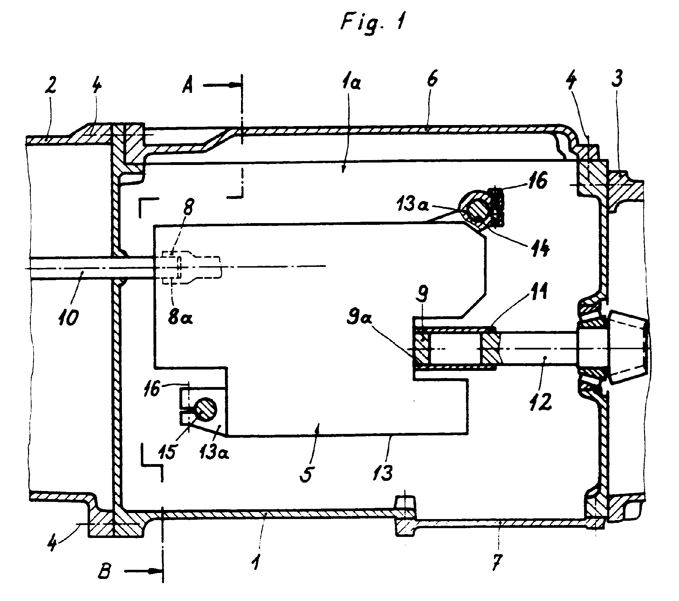

Das einen Teil eines Fahrzeugantriebes bildende Getriebegehäuse 1 ist gemäß Fig. 1 zwischen einem Kupplungsgehäuse 2 und einem Endabtriebsgehäuse 3 eingesetzt und mit den genannten Gehäusen mittels Schrauben 4 verbunden. Da bei dem in diesem Ausführungsbeispiel vorausgesetzten Fahrzeugtyp das Getriebegehäuse 1 als von oben leicht zugänglich angesehen wird, ist das Getriebegehäuse 1 nach oben offen. Die damit gegebene Gehäusewandöffnung la dient zum Einsetzen oder Entnehmen eines im Getriebegehäuse 1 schallabstrahlungsgedämpft untergebrachten hydrostatischen Getriebes 5 und ist mit einer Abdeckung 6 verschlossen. Der besseren Zugänglichkeit im Innenraum des Getriebegehäuses 1 ist auch in der unteren Gehäusewand eine durch eine Platte 7 verschließbare Öffnung vorgesehen.

Von den für die Getriebefunktion wichtigen Getriebeteilen des hydrostatischen Getriebes 5 ist lediglich die Antriebswelle mit 8 und die Abtriebswelle mit 9 angedeutet. Beide Wellen 8, 9 sind in ihrem freien Endbereich mit einer Keilverzahnung 8a, 9a versehen, über die sie mit den benachbarten Wellen kuppelbar sind. So nimmt die mit einer Hohlverzahnung 8a versehene Antriebswelle 8 die Kupplungsabtriebswelle 10 auf, die zu diesem Zweck in Längsrichtung verschiebbar gelagert ist, während die Abtriebswelle 9 über eine mit einem Hohlkeilwellenprofil versehene Schiebemuffe 11 mit der Endabtriebswelle 12 gekuppelt ist. Um den Geräuschpegel des gesamten Antriebes weiter zu verringern kann in den Kraftfluß der Kupplungsabtriebswelle 10 ein Torsionsdämpfer eingeschaltet und die Schiebemuffe 11 durch eine elastische Kupplung ersetzt sein.

An diametral entgegengesetzten Endbereichen des Gehäuses 13 des hydrostatischen Getriebes 5 - in der Zeichnung im linken Endbereich unten und im rechten Endbereich oben - sind am Gehäuse 13 mit Abstand voneinander je zwei Klemmaugen 13a angebracht. Die Klemmaugen 13a weisen quer zur Längsrichtung der Antriebswelle 8 bzw. Abtriebswelle 9 verlaufende, einseitig aufgeschlitzte Durchgangsbohrungen auf. Durch die Durchgangsbohrungen jeweils benachbarte Klemmaugen 13a ist eine Stange 14 bzw. 15 hindurchgesteckt und mit Hilfe einer Klemmschraube 16 fest mit dem Gehäuse 13 verspannt.

Die freien Endbereiche der Stangen 14, 15 ragen in Durchgangsbohrungen 1b des Getriebegehäuses 1 hinein, wobei sie sich über ansich bekannte elastische Dämpfungselemente 17, 18 in den Durchgangsbohrungen 1b sowohl radial als auch axial abstützen. In Fig. 2 sind für die Lagerung der Stangen 14, 15 und damit des hydrostatischen Getriebes 5 innerhalb des Getriebegehäuses 1 zwei unterschiedliche Ausführungen wiedergegeben. Tatsächlich wird aber bei einer derartigen Anlage für die Lagerungen nur eine einzige Ausführung in Betracht gezogen werden.

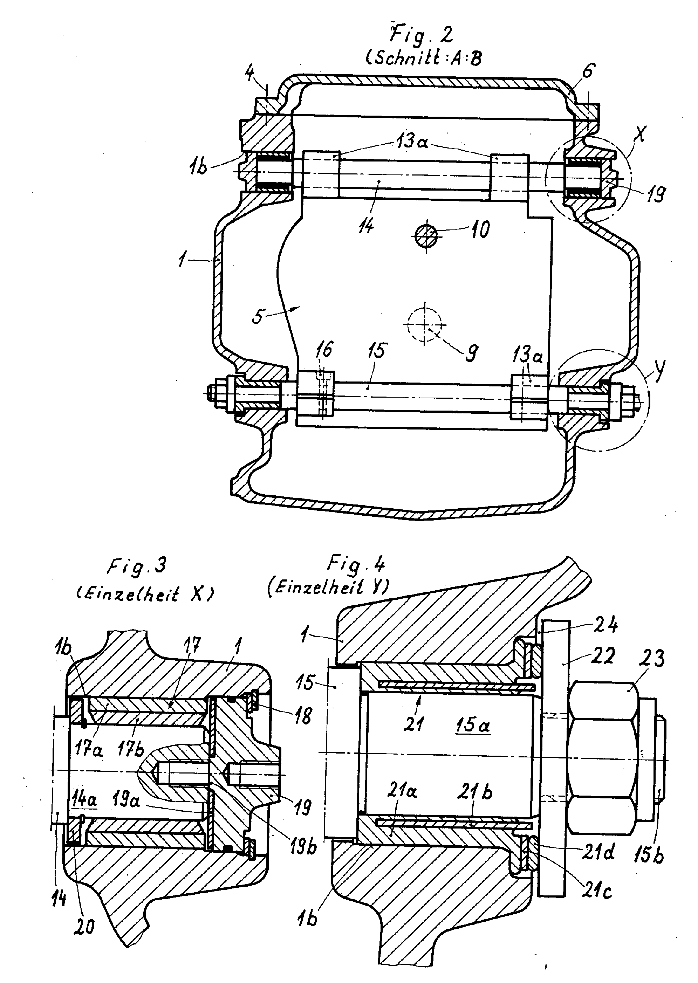

Die obere, mit X bezeichnete Lagerung ist in Fig. 3 in einem größeren Maßstab erkennbar. Danach besteht das Dämpfungselement 17 aus einem ringförmigen Metallkörper 17a mit innerer anvulkanisierter Gummischicht 17b, der spielfrei auf den Endbereich der Stange 14 aufgeschoben ist. Sämtliche in Längsrichtung des hydrostatischen Getriebes 5 wirkende sowie aus der Drehmomentabstützung resultierende Kräfte belasten dieses Dämpfungselement 17 in vorteilhafter Weise ausschließlich in radialer Richtung. Zur Aufnahme von Querkräften und insbesondere zur axialen Festlegung der Stange 14 ist in jede Durchgangsbohrung 1b eine mittels Sicherungsring 18 axial festgelegte Anschlagscheibe 19 eingesetzt. Diese trägt an ihrer der Stange 14 zugewandten Stirnseite eine Scheibe 19a aus elastischem Material, an der die Stange 14 axial spielfrei anliegt. Die elastische Scheibe 19a ist ausreichend breit, um normale Axialschwingungen der Stange 14 elastisch aufzunehmen. Im Fall des Auftretens anormal großer Axialschwingungen kommt die Stange 14 mit ihrer Stirnseite in Kontakt mit dem inneren Ansatz 19b der Anschlagscheibe 19, wodurch einer weiteren Vergrößerung der Axialschwingungen entgegengewirkt wird. Den gleichen Effekt bezüglich übergroßer Radialschwingungen der Stange 14 bietet eine an einem Absatz 14a der Stange 14 festgelegte, sich innerhalb der Durchgangsbohrung 1b befindliche Scheibe 20, die mit einem geringen Spiel zur Durchgangsbohrung 1b ausgestattet ist, daß der Stange 14 lediglich das Ausführen von radialen Schwingungen in zulässiger Größenordnung erlaubt.

Die untere, in Fig. 2 mit Y bezeichnete und in Fig. 4 in einem größeren Maßstab wiedergegebene Lagerung für die Stange 15 besteht aus einem elastischen Dämpfungselement 21, in dessen Gummikörper 21a ein rohrförmiger Metallkörper 21b und ein scheibenförmiger Metallkörper 21c eingebettet ist. Dieses Dämpfungselement 21 muß nach dem Einschieben in den Ringraum zwischen der Durchgangsbohrung 1b und einem Stangenzapfen la derart gestaucht werden, daß es mit hoher Radialkraft an der Wandung der Durchgangsbohrung 1b anliegt und so in der Lage ist, hohe axiale und radiale Stangenkräfte aufzunehmen. Das Stauchen des Dämpfungselementes 21 erfolgt durch Anziehen einer eine Anschlagscheibe 22 gegen den Bund 21d des Dämpfungselements 21 drückenden Schraubenmutter 23, die auf einem Gewindezapfen 15b an der Stirnseite des Zapfens 15a verschraubbar ist. Da dies in beiden Endbereichen der Stange 15 geschieht, ist sie axial fest eingespannt und kann nur geringfügige, zulässige Axialschwingungen ausführen. Unzulässig große Axialschwingungen der Stange 15 werden dadurch unterbunden, daß sich die Anschlagscheibe 22 außerhalb der Durchgangsbohrung 1a befindet und radial uber diese hinaus erstreckt, wobei zwischen ihr und den Getriebegehäuse 1b ein definierter, der Größe der zul. Axialschwingungen entsprechender Freigang belassen ist. Als Anschlag zur Unterdrückung unzulässig großer Radialschwingungen der Stange 15 dient ein Teil der Stange 15 selbst, indem sie mit einem etwas geringeren Durchmesser in einem vom Dämpfungselement 21 nicht beanspruchten Teil der Durchgangsbohrung 1b eintaucht.

Bei der Montage wird das hydrostatische Getriebe 5 mit einem geeigneten Hebezeug von oben durch die Gehäusewandöffnung 1a in das Getriebegehäuse 1 abgesenkt. Sobald sich zwei benachbarte Durchgangsbohrungen in den Klemmaugen 13a in Höhe der Durchgangsbohrungen 1b des Getriebegehäuses 1 befinden, wird die zugeordnete Stange 14, 15 bei gelösten Klemmschrauben 16 von außen abgesteckt. Nach dem Einbau der Dämpfungselemente 17 bzw. 21 und der Anschlagscheiben 19 bzw. dem Spannen der Schraubenmuttern 23 ist die Stange 14,15 in sämtlichen Richtungen festgelegt. Nachdem der entsprechende Vorgang des Absteckens der Stange 14, 15 auch am anderen Endbereich des hydrostatischen Getriebes 5 erfolgt ist, wird dieses durch Ausrichten in Querrichtung in seine Betriebslage gebracht. Das hydrostatische Getriebe 5 wird nun sicher von den Stangen 14, 15 getragen, so daß jetzt die vorher zurückgeschobene Kupplungsabtriebswelle 10 in die Antriebswelle 8 und die Schiebemuffe 11 über die Endabtriebswelle 12 zu schieben ist. Danach kann das hydrostatische Getriebe 5 durch Anziehen der Klemmschrauben 16 in der eingenommenen Position gesichert werden. Diese einmal als richtig gefundene Stellung des hydrostatischen Getriebes 5 auf den Stangen 14, 15 kann dann dauerhaft wieder auffindbar gemacht werden durch ansich bekannte Maßnahmen, wie z. B. Anbohren der beiden Bauteile und Einsetzen von Spannstiften in diese Bohrung.

Läßt nach längerer Einsatzzeit die Funktionsfähigkeit eines Dämpfungselements nach, so kann dieses wegen seiner guten Zugänglichkeit von außen ohne Ausbau des hydrostatischen Getriebes ersetzt werden. Es ist hierzu bei einer Lagerung gemäß Fig. 3 beispielsweise lediglich aus der das auszuwechselnde Dämpfungselement 17 enthaltenden Durchgangsbohrung 1b die Anschlagscheibe 19 zu entfernen und nach dem Lösen der Klemmverbindung der zugeordneten Stange 14 diese soweit herauszuziehen, bis das darauf sitzende Dämpfungselement 17 erfaßbar und entfernbar ist. Dabei bleibt die Stange 14 innerhalb der Durchgangsbohrung 1b durch die Scheibe 20 zentriert. Das Dämpfungselement 21 der Lagerung nach Fig. 4 ist noch einfacher zu entfernen, da es nach dem Lösen der Schraubenmutter 23 und Entfernen der Scheibe 22 seine radiale Spannkraft verloren hat und ohne weiteres aus der Durchgangsbohrung 1b herausziehbar ist. Hierbei ist es nicht einmal notwendig, die Klemmverbindung der Stange 15 mit dem hydrostatischen Getriebe 5 aufzuheben.

## Patentansprüche

1. Schallabstrahlungsgedämpfte Lagerung eines Antriebsaggregates, insbesondere eines hydrostatischen Getriebes (5), innerhalb eines Fahrzeuggetriebegehäuses (1), unter Verwendung von körperschallentkoppelnden Dämpfungselementen, die im vorderen und hinteren Endbereich des hydrostatischen Getriebes zwischen dem Getriebegehäuse und einer den Körperschall führenden Abstützung für das hydrostatische Getriebe angeordnet sind,
**dadurch gekennzeichnet**,
daß das hydrostatische Getriebe (5) durch eine verschließbare Gehäusewandöffnung (1a) in das Getriebegehäuse (1) einsetzbar ist und in seiner Betriebslage von quer zur Antriebswelle (8) und Abtriebswelle (9) des hydrostatischen Getriebes (5) verlaufenden Stangen (14,15) getragen ist, die endseitig über in Durchgangsbohrungen (1b) des Getriebegehäuses (1) eingesetzte ringförmige, körperschallentkoppelnde Dämpfungselemente (17,21) gelagert und fest mit dem Gehäuse des hydrostatischen Getriebes (5) verbunden sind.

2. Lagerung nach Anspruch 1,
**dadurch gekennzeichnet**,
daß im vorderen und hinteren Endbereich des hydrostatischen Getriebes (5) je eine Stange (14,15) eingesetzt ist.

3. Lagerung nach Anspruch 1 und 2,
**dadurch gekennzeichnet,**
daß die Stangen (14,15) höhenmäßig gegeneinander versetzt sind.

4. Lagerung nach Anspruch 3,
**gekennzeichnet durch** eine Anordnung der
Stangen (14,15) derart, daß sich die Abtriebswelle (9) des hydrostatischen Getriebes (5) in Achsrichtung gesehen zumindest annähernd mittig zwischen den Stangen (14,15) befindet.

5. Lagerung nach den Ansprüchen 1 bis 4,
**dadurch gekennzeichnet**,
daß die Stangen (14,15) über eine Klemmverbindung mit dem Gehäuse des hydrostatischen Getriebes (5) verbunden sind.

6. Lagerung nach Anspruch 1,
**dadurch gekennzeichnet**,
daß die Axial- und/oder Radialbewegung der Stangen (14,15) durch Axialanschläge (19,22) und Radialanschläge (15,20) begrenzt ist.

7. Lagerung nach Anspruch 6,
**dadurch gekennzeichnet,**
daß die Stange (14) stirnseitig zunächst an elastisch wirkenden körperschallentkoppelnden Dämpfungselementen (Scheibe (19a)) spielfrei anliegt und nach Überschreiten zulässiger Axialschwingungen an unelastischen Axialanschlägen (Ansatz (19b)) zur Anlage kommt.

8. Lagerung nach Anspruch 6,
**dadurch gekennzeichnet**,
daß auf einem endseitigen Zapfen (15a) der Stange (15) je ein Dämpfungselement (21) aufgesetzt ist, das mit einem Bund (21d) über die Stirnseite des Stangenzapfen hervorragt und von einer gegen die Stirnseite gepressten Anschlagscheibe (22) zusammendrückbar ist, die sich unter Bildung eines Ringspaltes (24) zum Getriebegehäuse (1) über den Bereich des Kragens (21d) bzw. der Durchgangsbohrung (1b) radial nach außen erstreckt.

9. Lagerung nach Anspruch 6,
**dadurch gekennzeichnet,**
daß zur Begrenzung der radialen Bewegungen der Stangen (14,15) eine auf der Stange (14) angeordnete Scheibe (20) bzw. ein Teilstück der Stange (15) in der Durchgangsbohrung (1b) mit vorgegebenem Radialspiel geführt ist.

## Claims

1. A sound absorbing mount for a drive unit, in particular a hydrostatic gearing (5), within the casing of a vehicle gearing (1), using sound of solids decoupling absorption elements which are arranged in the front and rear end regions of the hydrostatic gearing between the gear casing and a hydrostatic gearing support which ducts the sound in solids, **characterised in that** the hydrostatic gearing (5) is insertable into the gear casing (1) through a sealable casing-wall opening (1a) and borne in its operational position by bars (14, 15), which extend transversely to the driveshaft (8) and output shaft (9) of the hydrostatic gearing (5) and which are mounted in the end regions in circular and sound in solids decoupling absorption elements (17, 21 which are inserted into passages (1b) of the gear casing (1) and which are fixed to the casing of the hydrostatic gearing (5).

2. A mount according to claim 1, **characterised in** **that** one each bar (14, 15) is inserted in the front and rear end region of the hydrostatic gearing (5).

3. A mount according to claim 1 and 2, **characterised in that** the bars (14, 15) are in their height offset relative to each other.

4. A mount according to claim 3, **characterised by** an arrangement of the bars (14, 15) in such a manner that the output shaft (9) of the hydrostatic gearing (5) is at least virtually centrally between the bars (14, 15), as seen in the axial direction.

5. A mount according to claims 1 to 4, **characterised in that** the bars (14, 15) are connected to the casing of the hydrostatic gearing (5) by means of a clamp connection.

6. A mount according to claim 1, **characterised in that** the axial and/or radial movement of the bars (14, 15) is restricted by axial stops (19, 22) and radial stops (15, 20).

7. A mount according to claim 6, **characterised in** **that** the bar (14) initially abuts without play at its end on elastically operative sound in solids decoupling absorption elements (disc (19a)) and, after having exceeded admissible axial vibrations, on non-elastic axial stops (extension (19b).

8. A mount according to claim 6, **characterised in** **that** onto an endsided stub (15a) of the bar (15) is pushed a respective absorption element (21), which protrudes with a collar (21d) beyond the end of the bar stub and is compressed by a stop disc (22), which is pressed against the end and which extends radially outwards whilst forming an annular gap (24) relative to the gear casing (1) over the area of the collar (21d) or the passage (1b) respectively.

9. A mount according to claim 6, **characterised in** **that** a disc (2), which is arranged on the bar (14), or a portion of the bar (15) is guided at a specified play in the passage (1b) for the purpose of restricting radial movements of the bars (14, 15).

## Revendications

1. Montage amortissant le rayonnement du son dans un mécanisme d'entraînement, en particulier dans une transmission hydrostatique 5) à l'intérieur d'un carter de transmission (1) de véhicule à moteur en utilisant des éléments amortisseurs désaccouplant les bruits de structure, éléments qui, dans la zone antérieure et la zone postérieure terminales de la transmission hydrostatique sont disposés entre le carter de transmission et un support de transmission hydrostatique conducteur des bruits de structure, montage caractérisé en ce que la transmission hydrostatique (5) peut être insérée dans le carter de transmission (1) par une ouverture pratiquée dans la paroi du carter et pouvant être fermée (1a), et être mise dans sa position de fonctionnement par des tiges (14, 15) s'étendant perpendiculairement à l'arbre d'entraînement (8) et à l'arbre de sortie (9) de la transmission hydrostatique (5), tiges qui sont montées du côté terminal au moyen d'éléments d'amortissement (17, 21) de forme annulaire insérés dans des alésages de passage (1b) du carter de transmission (1) et désaccouplant les bruits de structure ces éléments d'amortissement reliés de façon solidaire au carter de la transmission hydrostatique (5).

2. Montage selon la revendication 1, caractérisé en ce que dans la zone avant et la zone arrière terminale de la transmission hydrostatique (5) est insérée respectivement une tige (14, 15).

3. Montage selon la revendication 1 et 2, caractérisé en ce que les tiges (14, 15) sont décalées en hauteur l'une par rapport à l'autre.

4. Montage selon la revendication 3, caractérisé par une disposition des tiges (14, 15) telle que l'arbre d'entraînement (9) de la transmission hydrostatique, vu dans le sens axial, se trouve à peu près au milieu entre les tiges (14, 15).

5. Montage selon les revendications 1 à 4, caractérisé en ce que les tiges (14, 15) sont reliées par un accouplement de serrage au carter de la transmission hydrostatique (5).

6. Montage selon la revendication 1, caractérisé en ce que le mouvement axial et/ou radial des tiges (14, 15) est limité par des butées axiales (19, 22) et des butées radiales (15, 20).

7. Montage selon la revendication 6, caractérisé en ce que la tige (14) repose sans jeu du côté frontal d'abord sur des éléments d'amortissement agissant élastiquement et désaccouplant les bruits de structure (rondelle 19a) et, après dépassement des oscillations axiales acceptables, vient en appui sur des butées axiales inélastiques (appendice (19b)).

8. Montage selon la revendication 6, caractérisé en ce que sur chaque tenon situé du côté terminal (15a) de la tige (15) est placé un élément d'amortissement (21) qui fait saillie par une collerette (21d) sur la face frontale du tenon de la tige et peut être comprimée par une rondelle de butée (22) pressée contre la face frontale, rondelle qui s'étend radialement vers l'extérieur en formant une fente annulaire (24) vers le carter (1) de la transmission sur la zone de la collerette (21d) ou de l'alésage de passage (1b).

9. Montage selon la revendication 6, caractérisé en ce que pour limiter les mouvements radiaux des tiges (14, 15), on fait passer une rondelle (20) disposée sur la tige (14) ou une partie de la tige (15) dans l'alésage de passage (1b) en ménageant un jeu radial prédéfini.
